# EUROPEAN PATENT APPLICATION

(11) **EP 1 426 855 A1**
(43) Date of publication of application: **09.06.2004**
(21) Application number: 02760706.8
(22) Date of filing: 22.08.2002
(51) Int. Cl.: G06F 3/03, G06F 3/033

(54) **INFORMATION PROCESSING SYSTEM, I/O DEVICE, PORTABLE INFORMATION TERMINAL APPLIANCE AND DISPLAY DEVICE**

(30) Priority: 22.08.2001 JP 2001252029
(71) Applicant: SEIKO EPSON CORPORATION, Shinjuku-ku, Tokyo 163-0811 (JP)
(72) Inventor: KOYAMA, Fumio, c/o Seiko Epson Corporation, Suwa-shi, Nagano 392-8502 (JP); MIYAMOTO, Toru, c/o Seiko Epson Corporation, Suwa-shi, Nagano 392-8502 (JP); MIYAKOSHI, Daisuke, c/o Seiko Epson Corporation, Suwa-shi, Nagano 392-8502 (JP)
(74) Representative: Sturt, Clifford Mark
(86) International application number: PCT/JP2002/008472
(87) International publication number: WO 2003/019345

(57) **Abstract**

To build an information processing system which can improve portability and convenience of personal digital assistants.

According to the present invention, through communications between a pen-shaped instruction device and input/output apparatus, information stored in the instruction device can be transmitted to the input/output apparatus and displayed there while information displayed on the input/output apparatus can be transmitted to the instruction device and stored there. Thus, the instruction device need not have a display device and can constitute a compact personal digital assistant which is easy to take anywhere. Also, the input/output apparatus, which need not be portable, can be provided with appropriate functions and varied in size according to application.

## Description

### Technical Field

The present invention relates to a ubiquitous information processing system using personal digital assistance as well as to an input/output apparatus, personal digital assistant, and display apparatus.

### Background Art

Recently, personal digital assistants (hereinafter referred to as portable terminals, as required) have spread rapidly, becoming increasingly smaller andmore sophisticated. The biggest advantage of portable terminals is that users can always carry one with them and use it to perform word-processing, spreadsheet, and other information-processing operations in any place.

A conventional portable terminal comprises an input unit used by the user to enter information, a controller which processes entered information and controls the entire apparatus, a display which displays results and other information, and a storage which stores information.

Except the display, these operational components have their size reduced along with downsizing of the portable terminal and have their performance enhanced to maintain a certain level of functionality.

Regarding the display, however, a certain size must be maintained for the convenience of the user even if the portable terminal is downsized. On the otherhand, upsizingthe display to some extent will prevent downsizing of the portable terminal itself. Specifically, a smaller portable terminal will make it inconvenient to use the display. Thus there is the problem that it is difficult to increase portability and convenience of portable terminals at the same time.

The same problem exists with some input units such as an input pad which combines a display and input unit.

On the other hand, there is a system (hereinafter referred to as a "ubiquitous information processing system") based on the idea of eliminating the need to carry a portable terminal or the like by installing information processing units ubiquitously. Ubiquitous information processing systems, which can secure a certain size because there is no need to allow for portability, are believed to be user-friendly in this respect.

However, ubiquitous information processing systems are not easy for users to operate and have not found widespread use due to the inconvenience of the systems themselves. Therefore, most users generally use portable terminals.

Thus, an object of the present invention is to build an information processing system which can improve portability and convenience of personal digital assistants.

### Disclosure of the Invention

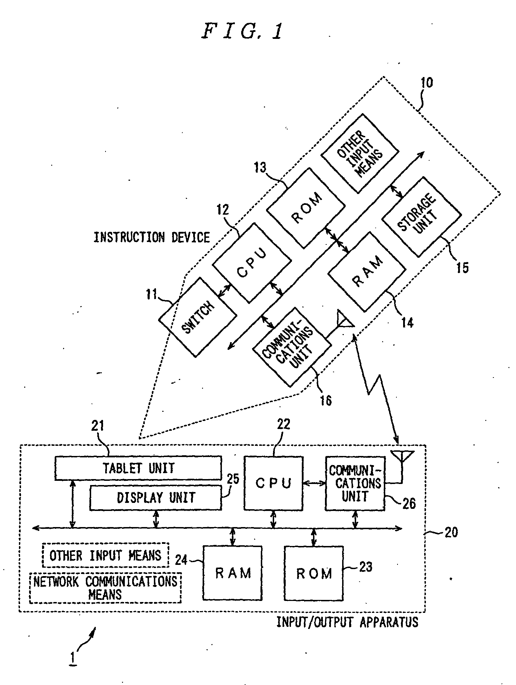

The present invention provides an information processing system comprising an input/output apparatus (e.g., an input/output apparatus 20 in FIG. 1) which displays information on an input/output screen (e.g., a screen consisting of a tablet unit 21 and display unit 25) according to input operations (e.g., using touches, light, or the like) on the input/output screen used to input and output information, and an instruction device (e.g., an instruction device 10 in FIG. 1) which is used to perform input operations and display information on the input/output screen, wherein: the above described input/output apparatus is capable of transmitting the information displayed on the input/output screen to the above described instruction device; and the above described instruction device is capable of storing the information received from the above described input/output apparatus.

Also, the above described instruction device is capable of transmitting the stored information to the above described input/output apparatus while the above described input/output apparatus is capable of displaying the received information on the above described input/output screen.

Also, the above described instruction device allows information displayed on the input/output screen to be selected or edited through input operations on the input/output screen of the above described input/output apparatus.

Also, the above described instruction device is capable of accepting information inputs from apparatus (e. g., personal computers, etc.) other than the above described input/output apparatus.

Also, the information processing system according to the present invention further comprises a display apparatus (e.g., an information display apparatus described in DESCRIPTION OF THE PREFERRED EMBODIMENT) capable of communicating with the above described instruction device, wherein the above described instruction device transmits information to the display apparatus, which then displays the received information.

Also, the above described instruction device is of a pen type.

The term "pen type" here generally means a shape which has something like a pen tip and operability like a pen.

Also, the above described input/output apparatus or the above described display apparatus are installed ubiquitously in predetermined facilities (e.g., on desks and in meeting rooms of a company, in convenience stores, on seats in aircraft and trains, etc.).

Also, the above described input/output apparatus is capable of communicating with external devices via a network.

Also, the information processing system according to the present invention comprises multiple units of at least one of the above described input/output apparatus and the above described instruction device, wherein connections are allowed only between a particular input/output apparatus and instruction device.

The present invention provides a personal digital assistant which displays information on an input/output screen of an input/output apparatus (e.g., an input/output apparatus 20 in FIG. 1) when an input operation is performed on the input/output screen; and can store the information displayed on the input/output screen by receiving it from the input/output apparatus, with the above described input/output apparatus displaying information on the input/output screen according to input operations performed on the input/output screen.

Also, the personal digital assistant according to the present invention is capable of transmitting the stored information to the above described input/output apparatus.

Also, the personal digital assistant according to the present invention allows information displayed on the input/output screen to be selected or edited through input operations on the input/output screen of the above described input/output apparatus.

Also, the personal digital assistant according to the present invention is capable of accepting information inputs from apparatus other than the above described input/output apparatus.

Also, the personal digital assistant according to the present invention is capable of transmitting information to a display apparatus which is capable of communicating with the instruction device.

Also, the personal digital assistant according to the present invention is configured to be of a pen type.

Also, the personal digital assistant according to the present invention is allowed to connect with only a particular input/output apparatus from among the multiple input/output apparatuses.

The present invention provides an input/output apparatus which displays information on an input/output screen according to input operations on the input/output screen used to input and output information, wherein: the above described input/output apparatus is capable of transmitting the information displayed on the input/output screen to a personal digital assistant (e.g., the instruction device 10 in FIG. 1) which displays information on the input/output screen when an input operation is performed on the input/output screen.

Also, the input/output apparatus according to the present invention is capable of displaying the information received from the above described personal digital assistant on the above described input/output screen.

Also, the input/output apparatus according to the present invention allows information displayed on the input/output screen to be selected or edited through input operations performed with the above described personal digital assistant on the input/output screen.

Also, the input/output apparatus according to the present invention is capable of communicating with external devices via a network.

Also, the input/output apparatus according to the present invention is allowed to connect with only a particular personal digital assistant from among the multiple personal digital assistants.

The present invention provides a display, capable of communicating with a personal digital assistant (e.g., the instruction device 10 in FIG. 1) which displays information on an input/output screen of an input/output apparatus when an input operation is performed on the input/output screen and stores the informationdisplayedonthe input/output screen by receiving it from the input/output apparatus; and capable of displaying information received from the above described personal digital assistant, with the above described input/output apparatus displaying information on the input/output screen according to input operations performed on the input/output screen.

The present invention provides an information processing system comprising an input/output apparatus which displays information on an input/output screen according to input operations on the input/output screen used to input and output information, and an instruction device which causes information to be displayed, wherein: the above described instruction device is capable of transmitting information stored or generated by itself to the above described input/output apparatus; and the above described input/output apparatus is capable of displaying predetermined information based on the information received from the above described instruction device.

Also, the above described instruction device transmits control information (e.g., objects, etc. containing a description of predetermined procedures) for making the above described input/output apparatus execute predetermined processes; and the above described input/output apparatus executes the above described predetermined processes based on the control information.

Also, the above described instruction device allows information displayed on the input/output screen to be selected or edited through input operations on the input/output screen of the above described input/output apparatus.

Also, the above described instruction device is capable of accepting information inputs from the above described input/output apparatus or external devices.

Also, the above described instruction device is of a pen type.

Also, the above described input/output apparatus or the above described display apparatus are installed ubiquitously in predetermined facilities.

Also, the input/output apparatus according to the present invention is capable of communicating with external devices via a network.

Also, the information processing system according to the present invention comprises multiple units of at least one of the above described input/output apparatus and the above described instruction device, wherein connections are allowed only between a particular input/output apparatus and instruction device.

The present invention provides a personal digital assistant which displays information on an input/output screen of an input/output apparatus when an input operation is performed on the input/output screen; and makes the above described input/output apparatus display predetermined information by transmitting information stored or generated by itself, with the above described input/output apparatus displaying information on the input/output screen according to input operations performed on the input/output screen.

Also, the personal digital assistant according to the present invention is capable of transmitting control information for making the above described input/output apparatus execute predetermined processes.

Also, the personal digital assistant according to the present invention allows information displayed on the input/output screen to be selected or edited through input operations on the input/output screen of the above described input/output apparatus.

Also, the personal digital assistant according to the present invention is capable of accepting information inputs from the above described input/output apparatus or external devices.

Also, the personal digital assistant according to the present invention is configured to be of a pen type.

Also, the personal digital assistant according to the present invention is allowed to connect with only a particular input/output apparatus from among the multiple input/output apparatuses.

The present invention makes it possible to transmit information from an input/output apparatus where it is entered and displayed to an instruction device or personal digital assistant and store it there or transmit information stored or generated by the instruction device or personal digital assistant to the input/output apparatus and display it there.

Also, the present invention makes it possible to select or edit information stored in the instruction device or personal digital assistant while displaying it on the input/output apparatus.

Also, the present invention makes it possible to enter information in the instruction device or personal digital assistant from apparatus other than the input/output apparatus and store it in the instruction device or personal digital assistant for subsequent use.

Also, the present invention provides an apparatus intended only to display information stored in the instruction device or personal digital assistant.

Also, the instruction device or personal digital assistant is small enough to be carried easily and convenient and enter input into the input/output apparatus with ease.

Also, the present invention makes it possible to build a system containing a plurality of instruction devices and a plurality of input/output apparatus and process information by transferring it between any desired instruction device and input/output apparatus. Thus, it is possible to build a highly convenient ubiquitous information processing system which will allow the user to carry his/her own instruction device and process information stored in it at various places--at the office, on the go, on the street, etc.

Also, since the input/output apparatus is capable of transmitting and receiving information to/from external devices, the instruction device or personal digital assistant can transmit and receive information to/from the external devices via the input/output apparatus.

Also, in a system containing a plurality of instruction devices or personal digital assistants and a plurality of input/output apparatus, since information is allowed to be transferred only between a particular instruction device or personal digital assistants and a particular input/output apparatus, it is possible to improve information security and provide a mutual authentication function between apparatus.

### BRIEF DESCRIPTION OF THE DRAWINGS

FIG. 1 is a diagram showing a configuration of an information processing system 1;
FIG. 2 is a diagram showing how characters and the like are written on a display unit 25 of an input/output apparatus 20 with the pen tip of an instruction device 10;
FIG. 3 is a diagram showing the display unit 25 with an area selected on it by the instruction device 10;
FIG. 4 is a conceptual diagram showing how information is stored in the instruction device 10;
FIG. 5 is a diagram showing how an object transmitted from the instruction device 10 is displayed on the input/output apparatus 20;
FIG. 6 is a diagram showing how select, edit, and other operations are performed on the object displayed by the instruction device 10 on the input/output apparatus 20;
FIG. 7 is a diagram showing how information is displayed at the position of the pen tip;
FIG. 8 is a flowchart showing an example of processes run by the information processing system 1 as a whole;
FIG. 9 is a flowchart showing a transfer request process run by a CPU 22 of the input/output apparatus 20;
FIG. 10 is a flowchart showing a transfer request process run by a CPU 12 of the instruction device 10;
FIG. 11 is a flowchart showing a hand-written object transmission process run by a CPU 22 of the input/output apparatus 20;
FIG. 12 is a flowchart showing a hand-written object reception process run by the CPU 12 of the instruction device 10;
FIG. 13 is a flowchart showing a hand-written post-object-transmission process run by the CPU 22 of the input/output apparatus 20;
FIG. 14 is a flowchart showing a post-object-reception process run by the CPU 12 of the instruction device 10;
FIG. 15 is a flowchart showing a post-menu-transmission process run by the CPU 12 of the instruction device 10; and
FIG. 16 is a flowchart showing a post-menu-reception process run by the CPU 22 of the input/output apparatus 20.

### BEST MODE FOR PRACTICING THE INVENTION

An embodiment of an information processing system according to the present invention will be described in detail below with reference to the drawings.

Its configuration will be described first.

FIG. 1 is a diagram showing the configuration of the information processing system 1. In the figure, the information processing system 1 comprises an instruction device 10 and an input/output apparatus 20. The instruction device 10 has a pen-like external shape, a convenient shape for the user to carry. The input/output apparatus 20 is either a small tablet, or a large apparatus used for presentation or the like. It can be carried by the user or installed ubiquitously in predetermined facilities (e.g., in offices, in convenience stores, on seats in aircraft and trains, etc.) . The information processing system 1 includes multiple units of the instruction device 10 and input/output apparatus 20. A plurality of instruction devices 10 can share a plurality of input/output apparatus 20 (each instruction device 10 can transmit and receive information to/from a predetermined input/output apparatus 20 by establishing a connection with it as required).

To begin with, the functional configuration of the instruction device 10 will be described.

The instruction device 10 comprises a control button 11, CPU (Central Processing Unit) 12, ROM (Read Only Memory) 13, RAM (Random Access Memory) 14, storage unit 15, and communications unit 16 and may include other input means as required.

The control button 11 is a push button or the like which comprises a switching mechanism operable by the user.

The CPU 12 controls the entire instruction device 10. Based on signals entered via the control button 11, various instruction signals entered from the communications unit 16, and input signals entered via other input means, it reads programs and data related to various processes from the ROM 13 or RAM 14 and performs various processing. Also, the CPU 12 runs a transfer request processing program, hand-written object reception processing program, post-object-reception processing program, and post-menu-transmission processing program when a transfer request process (described later), hand-written object reception process (described later), post-object-reception process (described later), and post-menu-transmission process (described later) are ordered to be executed, respectively. Then, the CPU 12 outputs the results obtained through execution of the programs to the ROM 13 or RAM 14.

The ROM 13 consists, for example, of a nonvolatile memory such as a flash ROM and stores the transfer request processing program, hand-written object reception processing program, post-object-reception processing program, and post-menu-transmission processing program.

The RAM 14 consists, for example, of a volatile memory such as a SDRAM (Synchronous Dynamic Random Access Memory) . The RAM 14 is intended to store various data and temporarily stores data generated in various processes run by the CPU 12.

The storage unit 15 is of a type which uses a removable storage medium or a type which is mounted permanently in the instruction device 10. It stores the results of transfer request processes, hand-written object reception processes, post-object-reception processes, and post-menu-transmission processes as well as the results of various processes for controlling the instruction device 10.

The communications unit 16 is an infrared communications device, a Bluetooth or similar wireless communications device, or a weak radio unit using SAW (Surface Acoustic Wave) device as an oscillator source (or communications device using electrical contacts). It can communicate with the input/output apparatus 20.

The instruction device 10 can enter information in the input/output apparatus 20 as its tip (hereinafter referred to as the "pen tip") touches the tablet unit 21 of the input/output apparatus 20. In terms of input methods, the instruction device 10 can be a touch-sensitive type, light-sensitive type (a beam emitted from the pen tip is sensed by the tablet unit 21) , or the like. Thus, according to the input method, the pen tip of the instruction device 10 is equipped with a particular input means (light-emitting means or the like).

The control button 11 also serves as an additional input means for the user to indicate, for example, completion of object selection.

The instruction device 10 may comprise a voice input unit, image input unit, or the like for voice, images, or other information which does not need to be displayed for confirmation.

Next, the input/output apparatus 20 will be described.

The input/output apparatus 20 comprises the tablet unit 21, a CPU 22, a ROM 23, a RAM 24, a display unit 25, and a communications unit 26 and may comprise other input means or means of communication via a network, as required.

The tablet unit 21 allows information to be entered as the pen tip of the instruction device 10 touches it. Also, the tablet unit 21 outputs a signal for powering on the input/output apparatus 20 to the CPU 22 when touched by the pen tip of the instruction device 10. Furthermore, the tablet unit 21 outputs the information entered by the touch of the pen tip of the instruction device 10 to the CPU 22, ROM 23, RAM 24, and other functional components. Incidentally, the tablet unit 21 is made of a transparent material and allows information displayed on the underlying display unit 25 (described later) to be seen through it.

The CPU 22 controls the entire input/output apparatus 20. Based on a power-on signal output from the tablet unit 21, various instruction signals entered from the communications unit 26, and input signals entered via other input means, it reads programs and data related to various processes fromROM 23 or RAM 24 andperforms various processing. Also, the CPU 22 runs a transfer request confirmation processing program, hand-written object transmission processing program, hand-written post-object-transmission processing program, and post-menu-reception processing program when a transfer request confirmation process (described later), hand-written object transmission process (described later), hand-written post-object-transmission process (described later), and post-menu-reception process (described later) are ordered to be executed, respectively. Then, the CPU 22 outputs the results obtained through execution of the programs to the ROM 23 or RAM 24 or displays them on the display unit 25. Also, the CPU 22 senses that the tablet unit 21 comes apart from the instruction device 10 for a certain period of time or sends displayed information to the instruction device 10 on a certain occasion--upon time-out on input from the instruction device 10, at the user's instruction, etc.

The ROM 23 consists, for example, of a nonvolatile memory such as a flashROM and stores the transfer request confirmation processing program, hand-written object transmission processing program, hand-written post-object-transmission processing program, and post-menu-reception processing program.

The RAM 24 consists, for example, of a volatile memory such as a SDRAM (Synchronous Dynamic Random Access Memory) . The RAM 24 is intended to store various data and temporarily stores data generated in various processes run by the CPU 22.

The display unit 25 is a liquid crystal display device or the like. According to instructions from the CPU 22, it displays information stored in the ROM 23 or RAM 24. The display unit 25 is overlaid by the tablet unit 21 and the information displayed is viewed by the user through the tablet unit 21 made of a transparent material. The information displayed on the display unit 25 is associated by the CPU 22 with the contact positions of the pen tip of the instruction device 10 which are sensed by the tablet unit 21. Thus, the user can select or edit information displayed on the display unit 25 by touching it with the pen tip of the instruction device 10. This makes it easier to process information.

The communications unit 26 is an infrared communications device, a Bluetooth or similar wireless communications device, or a weak radio unit using SAW (Surface Acoustic Wave) device as an oscillator source. It can communicate with the instruction device 10.

Incidentally, it is possible to equip the input/output apparatus 20 with editing capabilities byproviding a keyboard, voice input means, or image input means.

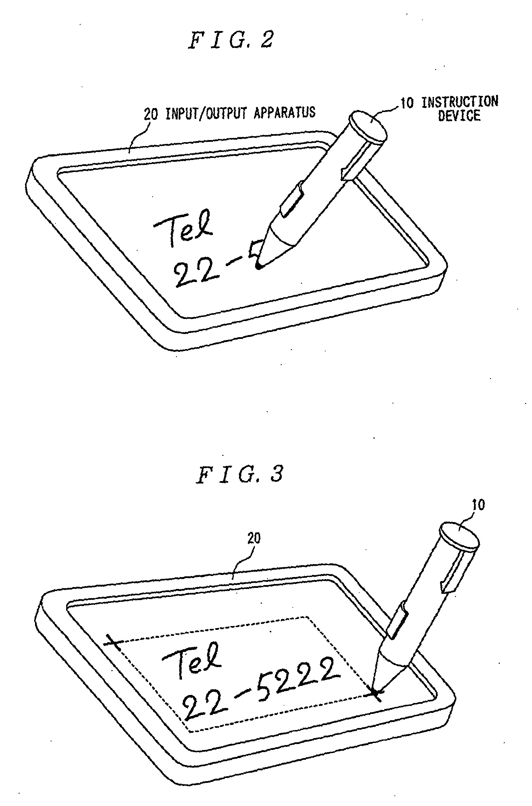

With the above configuration of the instruction device 10 and input/output apparatus 20, when the user writes characters or the like on the tablet unit 21 of the input/output apparatus 20 with the pen tip of the instruction device 10, the characters or the like are written on the display unit 25 of the input/output apparatus 20 (see FIG. 2).

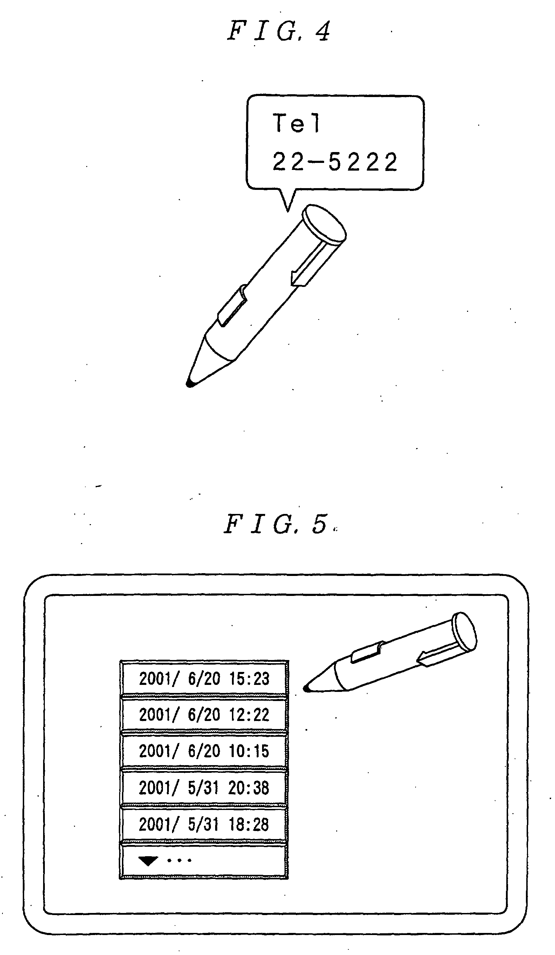

The hand-written object which is displayed after being written on the input/output apparatus 20 becomes selected when a specific area on the display unit 25 is selected with the instruction device 10 (see FIG. 3), and then the selected part is transmitted from the input/output apparatus 20 to the instruction device 10, which then stores the hand-written object (see FIG. 4). Incidentally, it is also possible to transmit all the objects displayed on the input/output apparatus 20 to the instruction device 10. Such hand-written objects may be handled directly as bitmap data or stroke (vector) data, or they may be handled as text data or formatted graphic data after going through a character recognition process. The process of recognizing the hand-written object may be carried out on the input/output apparatus 20 or carried out on the instruction device 10 after reception. Besides, after being transmitted from the input/output apparatus 20 to the instruction device 10, the obj ect may be either retained in the input/output apparatus 20 or deleted. Regarding the timing of deletion, the obj ect may be deleted on an appropriate occasion such as at the user's instruction or upon time-out.

In this way, the user can retrieve an object stored in the instruction device 10 by transmitting it from the instruction device 10 to the input/output apparatus 20. Specifically, when the user touches the position on the input/output apparatus 20 where he/she wants to display the retrieved object with the pen tip and operates the control button 11, a menu object is created to display a list of the objects stored in the instruction device 10 and is transmitted to the input/output apparatus 20. The input/output apparatus 20 displays the menu object at the position touched by the pen tip of the instruction device 10 (see FIG. 5).

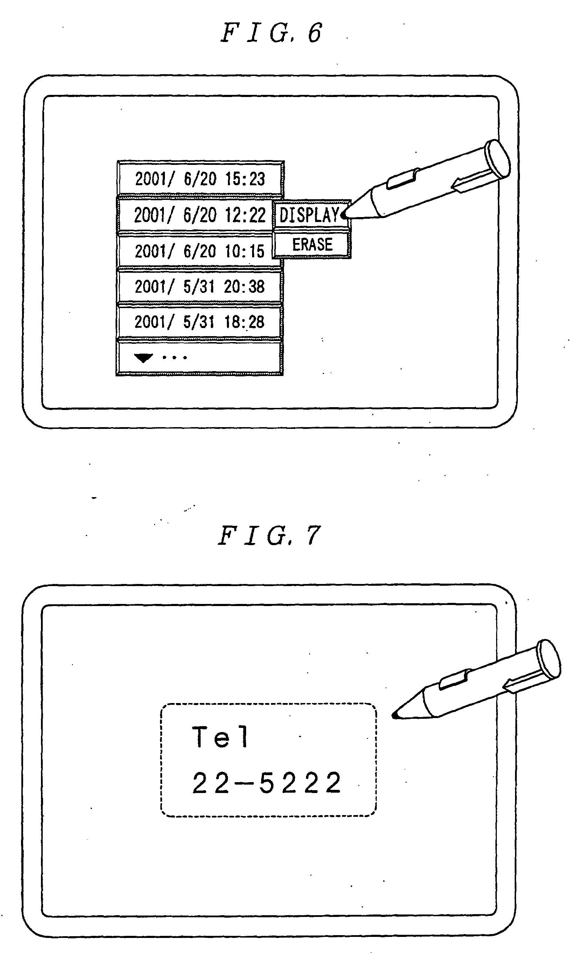

By manipulating the displayed menu object with the pen tip of the instruction device 10, it is possible to select a hand-written object to be retrieved (see FIG. 6).

In this way, the hand-written object selected by the user is transmitted from the instruction device 10 to the input/output apparatus 20 and reproduced on the display unit 25, for example, at the position in contact with the pen tip of the instruction device 10 (see FIG. 7).

Next, operations will be described.

First, the operation of the overall information processing system 1 will be described.

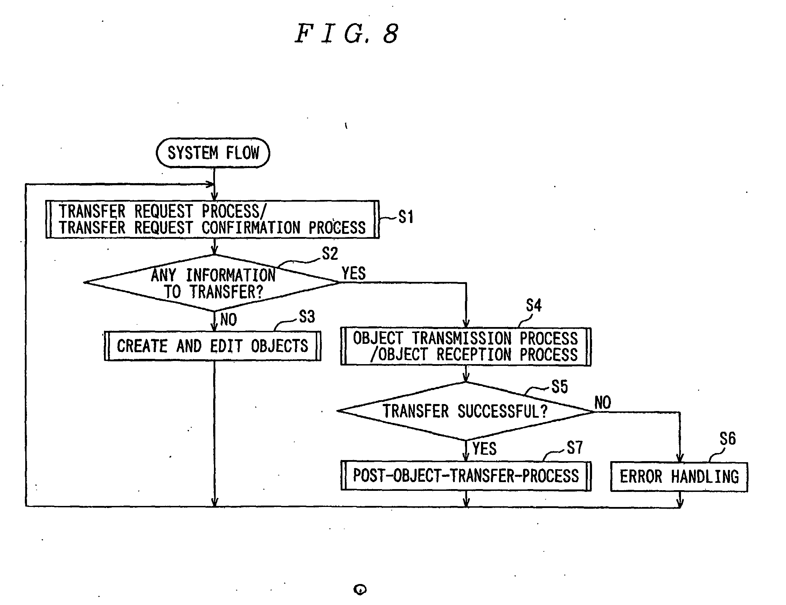

FIG. 8 is a flowchart showing an example of processes run by the information processing system 1 as a whole. In the figure, first, to enable information transfer between the input/output apparatus 20 and instruction device 10, the input/output apparatus 20 and instruction device 10 perform a transfer request process, or a transfer request confirmation process if they have no transfer request to make (Step S1).

Next, the input/output apparatus 20 and instruction device 10 each judge whether they have any information to transfer to the partner (Step S2). If it is judged that there is no information transfer, various objects are created (or existing objects are edited) on the display unit 25 of the input/output apparatus 20 as the pen tip of the instruction device 10 touches it (Step S3). The flow returns to Step S1 at predetermined intervals.

If it is judged in Step S2 that there is information to be transferred between the instruction device 10 and input/output apparatus 20, they perform a hand-written object transmission process and hand-written object reception process, respectively, to transfer the object (Step S4).

Next, the instruction device 10 and input/output apparatus 20 judge whether the information has been transferred successfully (Step S5). If it is judged that the information transfer was unsuccessful, the instruction device 10 and input/output apparatus 20 perform predetermined error handling (e.g., display an error message) (Step S6) and return to Step S1.

If it is judged in Step S5 that the information transfer was successful, the instruction device 10 and input/output apparatus 20 perform a post-object-transfer process (Step S7) and return to Step S1. Incidentally, the post-object-transfer process refers generally to the processes run by the instruction device 10 and input/output apparatus 20 after transmission and reception of an object, respectively. Therefore, the post-object-transfer process includes the processes run by the instruction device 10 and input/output apparatus 20 after transmission and reception of an object, respectively.

The instruction device 10 and input/output apparatus 20 perform the above processes at predetermined intervals.

Next, description will be given about the processes run by the instruction device 10 and input/output apparatus 20 in the flowchart of FIG. 8. Suppose the input/output apparatus 20 transfers a hand-written object to the instruction device 10 based on a transfer request from the input/output apparatus 20.

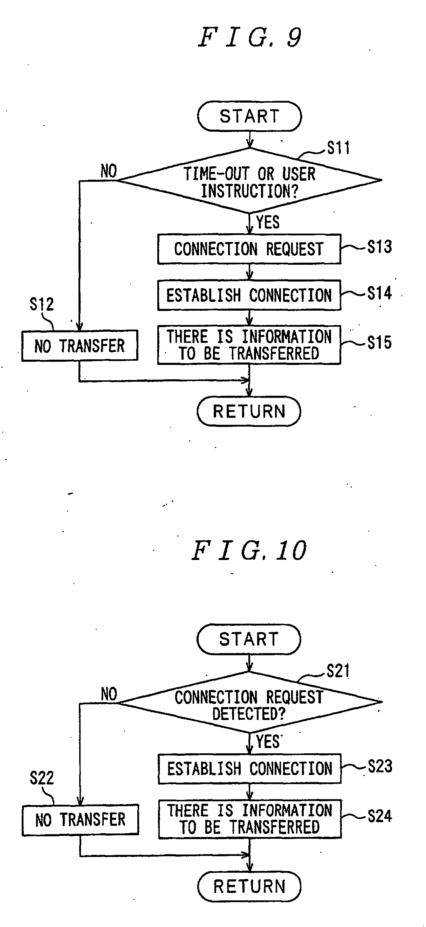

To begin with, the transfer request process run by the input/output apparatus 20 in Step S1 of FIG. 8 will be described. FIG. 9 is a flowchart of the transfer request process run by the CPU 22 of the input/output apparatus 20. The transfer request process is run by the input/output apparatus 20 with respect to the instruction device 10 when there is an object to be transferred from the input/output apparatus 20.

In FIG. 9, the CPU 22 judges whether information transfer from the input/output apparatus 20 to the instruction device 10 has been requested upon time-out on a predetermined process (e.g., time-out on input of an instruction for information transfer) or at the user's instruction via the instruction device 10 during the operation of the input/output apparatus 20 (Step S11).

If it is judged in Step S11 that no information is requested to be transferred from the input/output apparatus 20 to the instruction device 10, the CPU 22 determines that there is no information to be transferred (Step S12) and goes to Step S2 in FIG. 8.

If it is judged in Step S11 that information is requested to be transferred from the input/output apparatus 20 to the instruction device 10, the CPU 22 sends a request to the instruction device 10 to establish a connection (Step S13) and establishes a connection upon receipt of a reply signal from the instruction device 10 (Step S14).

Assuming that there is information to be transferred (Step S15), the CPU 22 goes to Step S2 in FIG. 8.

Next, description will be given about the transfer request confirmation process run by the instruction device 10 in Step S1 of FIG. 8. FIG. 10 is a flowchart of the transfer request confirmation process run by the CPU 12 of the instruction device 10. The transfer request confirmation process is repeated at predetermined intervals during the operation of the instruction device 10.

In FIG. 10, the CPU 12 judges whether a request to establish a connection has been received from the input/output apparatus 20 (Step S21). If it is judged that no such request has been received from the input/output apparatus 20, the CPU 12 determines that there is no information to be transferred (Step S22) and goes to Step S2 in FIG. 8.

On the other hand, if it is judged in Step S21 that a request to establish a connection has been received from the input/output apparatus 20, the CPU 12 sends a reply signal to the input/output apparatus 20, establishes a connection (Step S23), and goes to Step S2 in FIG. 8 assuming that there is information to be transferred (Step S24).

Incidentally, the method for judging in Step S22 and Step S24 whether or not there is information to be transferred is the same as in FIG. 9.

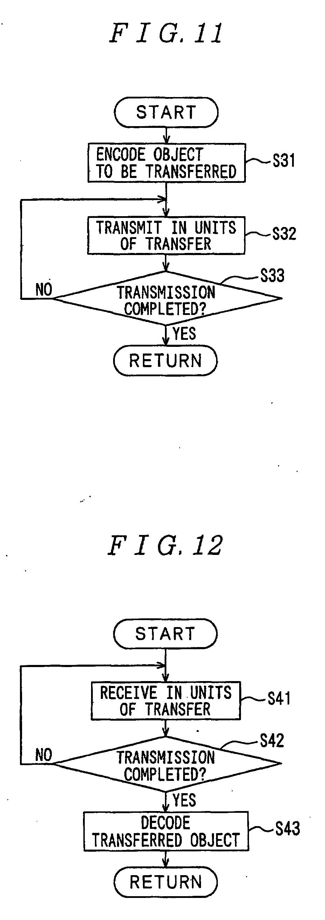

Next, description will be given about the hand-written object transmission process run by the input/output apparatus 20 in Step S4 of FIG. 8. FIG. 11 is a flowchart of the hand-written object transmission process run by the CPU 22 of the input/output apparatus 20. The hand-written object transmission process is run when the CPU 22 of the input/output apparatus 20 judges that it has information to transmit to the instruction device 10 (Step S15 in FIG. 9).

Referring to FIG. 11, when the hand-written object transmission process is started, the CPU 22 encodes the information (object) to be transferred into an appropriate format according to the method of communication with the instruction device 10 (Step S31) and transmits it in predetermined units of transfer to the instruction device 10 (Step S32).

Next, the CPU 22 judges whether the transmission of the information has been completed (Step S33). If it is judged that the transmission is not complete, the CPU 22 goes to Step S32. If it is judged that the transmission is complete, the CPU 22 goes to Step S5 in FIG. 8.

Next, description will be given about the hand-written object reception process run by the instruction device 10 in Step S4 in FIG. 8. FIG. 12 is a flowchart showing the hand-written object reception process run by the CPU 12 of the instruction device 10. The hand-written obj ect reception process is run when the CPU 12 judges that there is information to be transferred from the input/output apparatus 20 (Step S24 in FIG. 10).

Referring to FIG. 12, when the hand-written object reception process is started, the CPU 12 receives the information (encoded object) in predetermined units of transfer from the input/output apparatus 20 (Step S41) and judges whether the transmission of the information from the input/output apparatus 20 has been completed (Step S42).

If it is judged in Step S42 that the transmission of the information fromthe input/output apparatus 20 isnot complete, the CPU 12 goes to Step S41. If it is judged that the transmission of the information from the input/output apparatus 20 is complete, the CPU 12 decodes the transferred information (Step S43) and goes to Step S5 in FIG. 8.

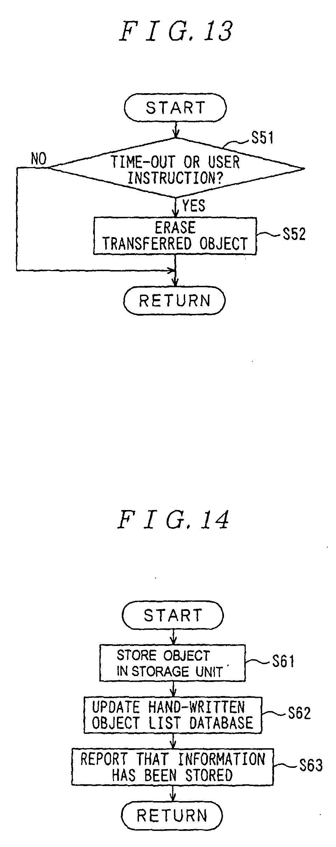

Next, out of the post-object-transfer processes run in Step S7 of FIG. 8, description will be given about the hand-written post-object-transmission process run by the input/output apparatus 2 0 after transmission of a hand-written object. FIG. 13 is a flowchart showing the hand-written post-object-transmission process run by the CPU 22 of the input/output apparatus 20. the hand-written post-object-transmission process is run when the CPU 22 of the input/output apparatus 20 judges that information has been transferred successfully (the information transmission is complete in Step S33 of FIG. 11).

Referring to FIG. 13, when the hand-written post-object-transmission process is started, the CPU22 judges whether displayed information (object) is ordered to be erased upon display time-out or at the user's instruction (Step S51) .

If it is judged in Step S51 that neither the display time-out has expired nor the displayed information has been ordered to be erased, the CPU 22 goes to Step S1 in FIG. 8. If it is judged in Step S51 that either the display time-out has expired or the displayed information has been ordered to be erased, the CPU 22 erases the information which has already been transferred (Step S52) and then goes to Step S1 in FIG. 8.

Next, out of the post-object-transfer processes run in Step S7 of FIG. 8, description will be given about the post-object-reception process run by the instruction device 10 after the hand-written object is received by the input/output apparatus 20. FIG. 14 is a flowchart showing the post-object-reception process run by the CPU 12 of the instruction device 10. The post-object-reception process is run when the CPU 12 of the instruction device 10 judges that information has been transferred successfully from the input/output apparatus 20 (the information transmission from the input/output apparatus 20 is complete in Step S42 of FIG. 12).

Referring to FIG. 14, when the post-object-reception process is started, the CPU 12 stores the received information (object) in the storage unit 15 (Step S61) and updates a database (hand-written object list database) which stores the hand-written objects (hand-written character data written on the tablet unit 21) transmitted from the input/output apparatus 20 (Step S62).

Next, the CPU 12 informs the input/output apparatus 20 that the information received from the input/output apparatus 20 has been stored (Step S63) and goes to Step S1 in FIG. 8. Incidentally, the information transmitted by the CPU 12 in Step S63 may contain information about equipment conditions of the instruction device 10 such as available space in the storage unit 15 and then the input/output apparatus 20 may display the information about equipment conditions.

Next, description will be given about a case in which a hand-written object is transferred from the instruction device 10 to the input/output apparatus 20. In this case, the processes of Step S1 and Step S4 are basically the same as those in the transfer from the input/output apparatus 20 to the instruction device 10 although opposite in direction, and thus description thereof will be omitted. Description will be given below about the processes (post-menu-transmission process and post-menu-reception process) run after the information (object) stored in the instruction device 10 in Step S7 is transmitted to the input/output apparatus 20.

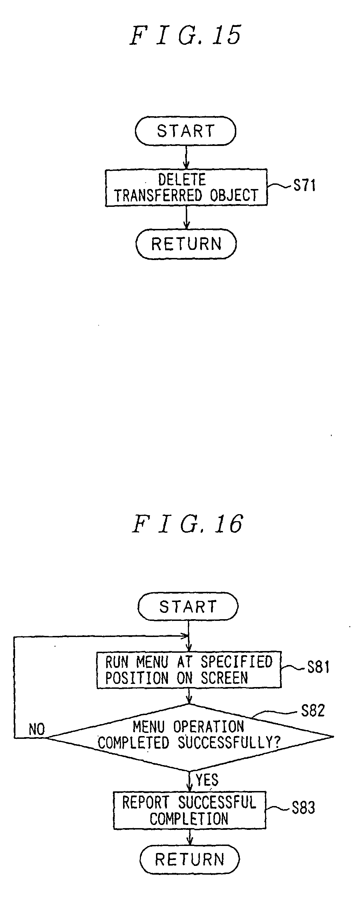

The post-menu-transmission process run by the instruction device 10 will be described first. FIG. 15 is a flowchart showing the post-menu-transmission process run by the CPU 12 of the instruction device 10. The post-menu-transmission process is run after information (object) stored in the instruction device 10 is transmitted to the input/output apparatus 20 by the user or the like.

Referring to FIG. 15, when the post-menu-transmission process is started, the CPU 12 deletes the information (object) which has been transmitted to the input/output apparatus 20, from the storage unit 15 and proceeds with subsequent operations (Step S71).

Next, the post-menu-reception process run by the input/output apparatus 20 will be described. FIG. 16 is a flowchart showing the post-menu-reception process run by the CPU 22 of the input/output apparatus 20. The post-menu-reception process is run after information (object) is transmitted from the instruction device 10 to the input/output apparatus 20.

Referring to FIG. 16, when the post-menu-reception process is started, the CPU 22 executes (e.g., displays) the received object at the position specified by the user on the display unit 25 (Step S81) and judges whether the operation on the object has been completed successfully (Step S82).

If it is judged in Step S82 that the running operation on the object has not been completed successfully, the CPU 22 goes to Step S81. If it is judged that the operation on the object has been completed successfully, the CPU 22 informs the instruction device 10 that the operation on the object has been completed successfully (Step S83) and proceeds with subsequent operations.

Incidentally, the post-object-transfer operations described above are only exemplary and post-object-transfer operations generally vary with the object type, as described above. Also, needless to say, preferable processes vary with the system used. For example, when an object displayed on the input/output apparatus 20 is transferred, the input/output apparatus 20 may run animations to make it appear as though the object were sucked into or discharged from the instruction device 10. This will make it possible to construct a system which is more intuitive to operate and to which the user will feel a strong attachment.

The post-object-transfer operations may be predefined for each object type on each device. Alternatively, procedures may be described beforehand in the objects themselves. This will makes it possible to process even unknown objects properly, making it possible in turn to provide a more versatile system.

As described above, by conducting communications between the pen-shaped instruction device 10 and input/output apparatus 20, the information processing system 1 according to the present invention can transmit information stored in the instruction device 10 to the input/output apparatus 20 and display it there as well as transmit information displayed on the input/output apparatus 20 to the instruction device 10 and store it there.

Thus, the instruction device 10 need not have a display device and can constitute a compact personal digital assistant which is easy to take anywhere. Also, the input/output apparatus 20, which need not be portable, can be provided with appropriate functions and varied in size according to application.

Also, the input/output apparatus 20 are installed ubiquitously in various facilities and a single instruction device 10 can transmit and receive information to/from a plurality of input/output apparatus 20.

Thus, by carrying the instruction device 10, the user canprocess (display, edit, etc.) stored information invarious facilities (e. g. , on the user's desk and inmeeting rooms within the company, on seats in aircraft and trains, etc.)

Also, by carrying the instruction device 10, the user can manage information easily, resulting in improved information security.

Incidentally, if equipped with input terminals or the like, the instruction device 10 may be configured to receive input from apparatus (e.g., personal computers, other personal digital assistants, etc.) other than the input/output apparatus 20. In that case, information prepared on the personal computers andthe like can be stored in the instruction device 10, allowing the instruction device 10 to handle various information.

Also, to display the information stored in the instruction device 10, a special-purpose information display apparatus may be included in this system in addition to the input/output apparatus 20.

Also, the instruction device 10 has been described as pen-shaped, it may take on another shape as long as it can be carried easily.

Furthermore, although according to this embodiment, any of the instruction devices 10 can communicate with any of the input/output apparatus 20 in the system, it is also possible to allow a particular instruction device 10 to communicate only with a particular input/output apparatus 20.

In that case, it is possible to improve the security of the information stored in the instruction device 10 and check the authenticity of both instruction device 10 and input/output apparatus 20.

On the other hand, if the instruction device 10 only stores objects and provides simple file management capabilities, its functions can be implemented not only as software processes, but also in hardware using large scale integrated circuits such as ASICs (Application Specific Integrated Circuits). In the latter case, the device canbe further downsized and speeded up.

The present invention has an extremely wide scope. For example, if the input/output apparatus 20 are installed on seats in aircraft and trains, in hotel rooms, etc. as described above, the user can record, display, or edit necessary information anywhere by simply carrying the instruction device 10.

Also, the input/output apparatus 20 will provide improved convenience if installed on public telephones: the user can take notes impromptu and store various information in the pen-shaped instruction device 10 even if he/she does not carry scratch paper as before.

Also, if the input/output apparatus 20 are installed on tables and the like in coffee shops or restaurants, the user can exchange information (objects) with friends, etc. over lunch or the like. Besides, if they are installed in convenience stores, information kiosks, and the like, it is possible to almost always provide services for organizing or outputting information stored in the instruction device 10.

In meeting rooms or lecture halls, the input/output apparatus 20, if installed on seats, will allow users to take notes, of course. In addition, if the functions of the information display apparatus according to the present invention are implemented in a large display apparatus for presentation, information stored in the instruction device 10 can be used directly for presentations, resulting in improved convenience.

Also, the input/output apparatus 20, whose size can be reduced readily to that of today's personal digital assistants, can be carried easily in a bag if so configured. Therefore, the user can use input/output apparatus 20 provided in means of transportation while in transit and use a small portable input/output apparatus 20 if no input/output apparatus 20 is provided in the field.

Furthermore, since the instruction device 10 can be used easily anywhere, it is possible to store particular objects in the instruction device 10, transfer them to another apparatus, and make it execute them. For example, it is possible to apply the present invention to electronic information boards in department stores and lead the user in the department stores according to personal preference data stored beforehand in the instruction device 10.

It is also easy to build a system which arranges for, changes, etc. tickets or hotels during a trip in a simple manner by storing a travel schedule in the instruction device 10.

In addition, by configuring the input/output apparatus 20 to access an Internet resource when an object containing the URL (Uniform Resource Locator) or URI (Uniform Resource Identifier) which specifies the resource is transferred from the instruction device 10 to the input/output apparatus 20, it is possible to make the instruction device 10 behave as if it had stored the resource.

Incidentally, the functions of the instruction device 10 may be incorporated into other apparatus. For example, if they are incorporated into portable telephones, which are always carried around, the present invention will be made more portable.

Besides, the input/output apparatus 20, if made compatible with conventional pen-type input devices by means of software, by the addition of hardware, etc., can accept information inputs from the conventional input devices, which thus canbe incorporated into the informationprocessing system 1 according to the present invention. This will help diffuse the use of the system according to the present invention.

### Industrial Applicability

The present invention makes it possible to transmit information from an input/output apparatus where it is entered and displayed to an instruction device or personal digital assistant and store it there or transmit information stored or generated by the instruction device or personal digital assistant to the input/output apparatus and display it there.

Also, the present invention makes it possible to transmit information stored in the instruction device or the personal digital assistant to the input/output apparatus and display it there.

Also, the present invention makes it possible to select or edit information stored in the instruction device or personal digital assistant while displaying it on the input/output apparatus.

Also, the present invention makes it possible to enter information in the instruction device or personal digital assistant from apparatus other than the input/output apparatus and store it in the instruction device or personal digital assistant for subsequent use.

Also, the present invention provides an apparatus intended only to display information stored in the instruction device or personal digital assistant.

Also, the instruction device or personal digital assistant is small enough to be carried easily and convenient and enter input into the input/output apparatus with ease.

Also, the present invention makes it possible to build a system containing a plurality of instruction devices and a plurality of input/output apparatus and process information by transferring it between any desired instruction device and input/output apparatus. Thus, it is possible to build a highly convenient ubiquitous information processing system which will allow the user to carry his/her own instruction device and process information stored in it at various places--at the office, on the go, on the street, etc.

Also, since the input/output apparatus is capable of transmitting and receiving information to/from external devices, the instruction device or personal digital assistant can transmit and receive information to/from the external devices via the input/output apparatus.

Also, in a system containing a plurality of instruction devices or personal digital assistants and a plurality of input/output apparatus, since information is allowed to be transferred only between a particular instruction device or personal digital assistants and a particular input/output apparatus, it is possible to improve information security and provide a mutual authentication function between apparatus.

## Claims

1. An information processing system comprising an input/output apparatus which displays information on an input/output screen according to input operations on the input/output screen used to input and output information, and an instruction device which is used to perform input operations and display information on the input/output screen, wherein:
said input/output apparatus is capable of transmitting the information displayed on the input/output screen to said instruction device; and
said instruction device is capable of storing the information received from said input/output apparatus.

2. The information processing system according to claim 1, wherein said instruction device is capable of transmitting the stored information to said input/output apparatus while said input/output apparatus is capable of displaying the received information on said input/output screen.

3. The information processing system according to claim 1 or 2, wherein said instruction device allows information displayed on the input/output screen to be selected or edited through input operations on the input/output screen of said input/output apparatus.

4. The information processing system according to any of claims 1 to 3, wherein said instruction device is capable of accepting information inputs from apparatus other than said input/output apparatus.

5. The information processing system according to any of claims 1 to 4, further comprising a display apparatus capable of communicating with said instruction device, wherein said instruction device transmits information to the display apparatus, which then displays the received information.

6. The information processing system according to any of claims 1 to 5, wherein said instruction device is of a pen type.

7. The information processing system according to any of claims 1 to 6, wherein said input/output apparatus or said display apparatus are installed ubiquitously in predetermined facilities.

8. The information processing system according to any of claims 1 to 7, wherein said input/output apparatus is capable of communicating with external devices via a network.

9. The information processing system according to any of claims 1 to 8, comprising multiple units of at least one of said input/output apparatus and said instruction device, wherein connections are allowed only between a particular input/output apparatus and instruction device.

10. A personal digital assistant which displays information on an input/output screen of an input/output apparatus when an input operation is performed on the input/output screen; and can store the information displayed on the input/output screen by receiving it from the input/output apparatus, with said input/output apparatus displaying information on the input/output screen according to input operations performed on the input/output screen.

11. The personal digital assistant according to claim 10, capable of transmitting the stored information to said input/output apparatus.

12. The personal digital assistant according to claim 10 or 11, wherein saidpersonal digital assistant allows information displayed on the input/output screen to be selected or edited through input operations on the input/output screen of said input/output apparatus.

13. The personal digital assistant according to any of claims 10 to 12, capable of accepting information inputs from apparatus other than said input/output apparatus.

14. The personal digital assistant according to any of claims 10 to 13, capable of transmitting information to a display apparatus which is capable of communicatingwith an instruction device.

15. The personal digital assistant according to any of claims 10 to 14, wherein said personal digital assistant is configured to be of a pen type.

16. The personal digital assistant according to any of claims 10 to 15, wherein said personal digital assistant is allowed to connect with only a particular input/output apparatus from among the multiple input/output apparatuses.

17. An input/output apparatus which displays information on an input/output screen according to input operations on the input/output screen used to input and output information,
wherein:
said input/output apparatus is capable of transmitting the information displayed on the input/output screen to a personal digital assistant which displays information on the input/output screen when an input operation is performed on the input/output screen.

18. The input/output apparatus according to claim 17, capable of displaying the information received from said personal digital assistant on said input/output screen.

19. The input/output apparatus according to claim 17 or 18, wherein said input/output apparatus allows information displayed on the input/output screen to be selected or edited through input operations performed with said personal digital assistant on the input/output screen.

20. The input/output apparatus according to any of claims 17 to 19, capable of communicating with external devices via a network.

21. The input/output apparatus according to any of claims 17 to 20, wherein said input/output apparatus is allowed to connect with only a particular personal digital assistant from among the multiple personal digital assistants.

22. A display, capable of communicating with a personal digital assistant which displays information on an input/output screen of an input/output apparatus when an input operation is performed on the input/output screen and stores the information displayed on the input/output screen by receiving it from the input/output apparatus; and capable of displaying information received from said personal digital assistant, with said input/output apparatus displaying information on the input/output screen according to input operations performed on the input/output screen.

23. An information processing system comprising an input/output apparatus which displays information on an input/output screen according to input operations on the input/output screen used to input and output information, and an instruction device for input/output operation on the input/output screen, which causes information to be displayed, wherein:
said instruction device is capable of transmitting information stored or generated by itself to said input/output apparatus; and
said input/output apparatus is capable of displaying predetermined information based on the information received from said instruction device.

24. The information processing system according to claim 23, wherein: said instruction device transmits control information for making said input/output apparatus execute predetermined processes; and said input/output apparatus executes said predetermined processes based on the control information.

25. The information processing system according to claim 23 or 24, wherein said instruction device allows information displayed on the input/output screen to be selected or edited through input operations on the input/output screen of said input/output apparatus.

26. The information processing system according to any of claims 23 to 25 wherein said instruction device is capable of accepting information inputs from said input/output apparatus or external devices.

27. The information processing system according to any of claims 23 to 26 wherein said instruction device is of a pen type.

28. The information processing system according to any of claims 23 to 27 wherein said input/output apparatus or said display apparatus are installed ubiquitously in predetermined facilities.

29. The information processing system according to any of claims 23 to 28, wherein said input/output apparatus is capable of communicating with external devices via a network.

30. The information processing system according to any of claims 23 to 29, comprising multiple units of at least one of said input/output apparatus and said instruction device, wherein connections are allowed only between a particular input/output apparatus and instruction device.

31. A personal digital assistant which displays information on an input/output screen of an input/output apparatus when an input operation is performed on the input/output screen; and makes said input/output apparatus display predetermined information by transmitting information stored or generated byitself to the input/output apparatus, with said input/output apparatus displaying information on the input/output screen according to input operations performed on the input/output screen.

32. The personal digital assistant according to claim 31, capable of transmitting control information for making said input/output apparatus execute predetermined processes.

33. The personal digital assistant according to claim 31 or 32, wherein said personal digital assistant allows information displayed on the input/output screen to be selected or edited through input operations on the input/output screen of said input/output apparatus.

34. The personal digital assistant according to any of claims 31 to 33, capable of accepting information inputs from said input/output apparatus or external devices.

35. The personal digital assistant according to any of claims 31 to 34, wherein said personal digital assistant is configured to be of a pen type.

36. The personal digital assistant according to any of claims 31 to 35, wherein said personal digital assistant is allowed to connect with only a particular input/output apparatus from among the multiple input/output apparatuses.
